# EUROPÄISCHE PATENTSCHRIFT

(11) **EP 2 102 976 B1**
(45) Veröffentlichungstag und Bekanntmachung des Hinweises auf die Patenterteilung: **09.07.2014**
(21) Anmeldenummer: 07820846.9
(22) Anmeldetag: 02.10.2007
(51) Int. Cl.: H02M 3/07

(54) **LADUNGSPUMPE**
CHARGE PUMP
POMPE DE CHARGEMENT

(30) Priorität: 29.11.2006 DE 102006056329
(43) Veröffentlichungstag der Anmeldung: 23.09.2009
(73) Patentinhaber: Robert Bosch GmbH, 70442 Stuttgart (DE)
(72) Erfinder: HIMMELSTOSS, Armin, 71554 Weissach Im Tal (DE); SCHNITZER, Reiner, 72762 Reutlingen (DE); HUEMBERT, Frank, 70188 Stuttgart (DE)
(86) Internationale Anmeldenummer: PCT/EP2007/060464
(87) Internationale Veröffentlichungsnummer: WO 2008/064945

(56) Entgegenhaltungen:
- EP-A- 1 341 309
- JP-A- 2005 151 444
- JP-A- 2005 260 866
- US-A- 5 831 483
- US-A- 5 942 948
- US-A- 6 040 742
- US-A1- 2002 149 429

## Beschreibung

Die vorliegende Erfindung betrifft eine Ladungspumpe und einen phasengekoppelten Regelkreis, der die erfindungsgemäße Ladungspumpe beinhaltet. Ferner betrifft die vorliegende Erfindung ein Verfahren zum Betreiben einer Ladungspumpe in einem phasengekoppelten Regelkreis.

Die US 5.942.948 ist allgemein auf einen Phasenregelkreise gerichtet. Der Phasenregelkreis 10 weist einen Phasendetektor 18 auf, der mit einer Ladungspumpe 22 gekoppelt ist. Die Ladungspumpe 22 1st wiederum mit einem spannungsgesteuerten Oszillator 28 über eine Leitung verbunden, die eine Filterschaltung 24 aufweist.

Nachfolgend wird eine der Erfindung zugrundeliegende Problematik anhand eines phasengekoppelten Regelkreises (Phase Locked Loop, PLL) erläutert, insbesondere eines phasengekoppelten Regelkreises, welcher einen Einsatz in einem FMCW-Radar findet.

Für ein FMCW-Radar wird ein Hochfrequenzsignal benötigt, dessen Frequenz über die Zeit nach einem fest vorgegebenen Muster, typischerweise mit zeitweise dreieckigsförmig veränderter Frequenz, variiert wird. Die Übertragung des Musters auf das Hochfrequenzsignal wird durch einen phasengekoppelten Regelkreis realisiert, der auf ein entsprechend zeitlich geändertes Referenzsignal oder auf ein konstantes Referenzsignal mit zeitlich geänderten Vielfachen der Referenzfrequenz geregelt wird.

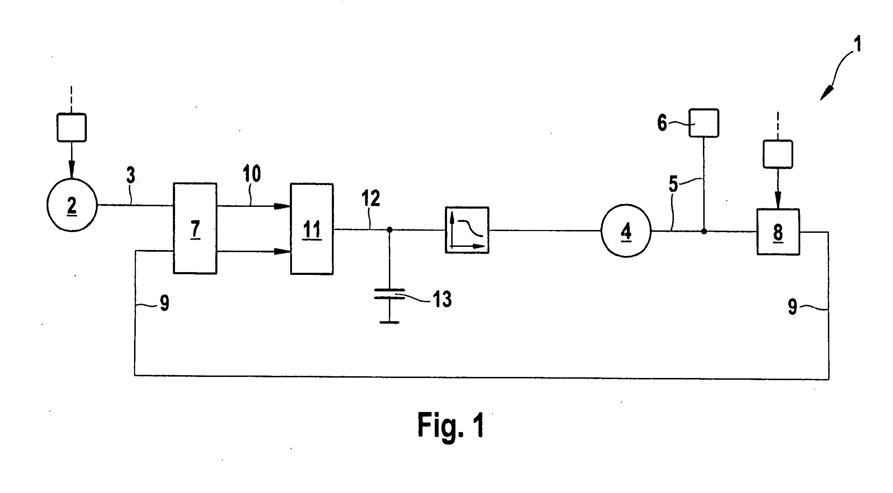

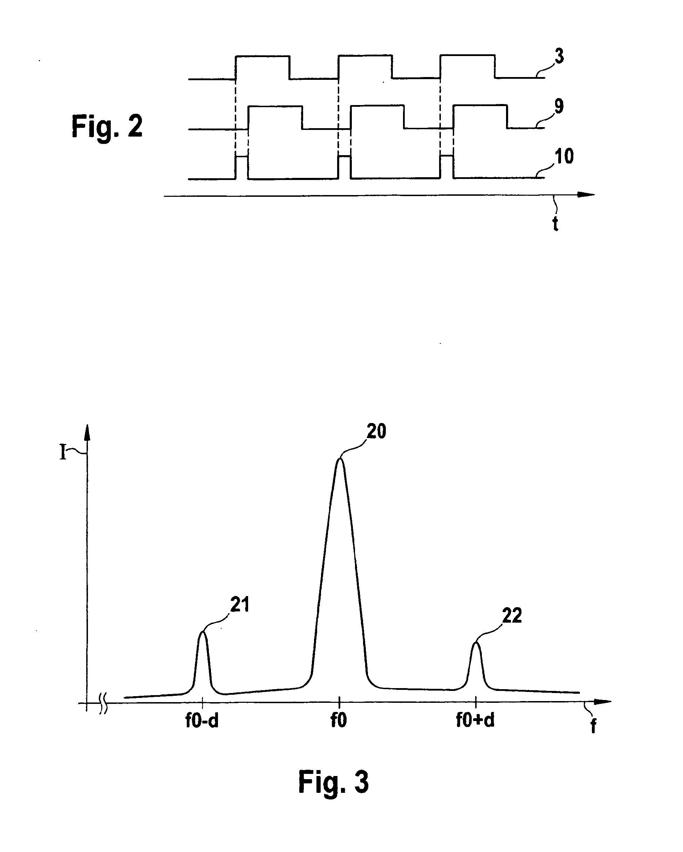

Ein schematischer Aufbau eines solchen phasengekoppelten Regelkreis 1 ist beispielhaft in Figur 1 gezeigt. Er umfasst eine Referenzsignalquelle 2, die das Referenzsignal 3 bereitstellt, einen spannungsgesteuerten Oszillator 4 zum Generieren des Hochfrequenzsignals 5 und einen Ausgang 6 zum Ausgeben des Hochfrequenzsignals 5. Einem Phasendetektor 7 wird zum Bestimmen eines Unterschieds der jeweiligen Phasen sowohl das Referenzsignal 3 als auch das Hochfrequenzsignal 5 oder ein durch einen Frequenzteiler 8 geteiltes Signal 9 zugeführt. Der Phasendetektor 7 gibt in Abhängigkeit des Phasenunterschieds ein gepulstes Steuersignal 10 an eine Ladungspumpe 11 aus, wie zum Beispiel in Fig. 2 angedeutet. Die Ladungspumpe 11 generiert ansprechend auf das Steuersignal 10 Strompulse 12, die einen nachgeschalteten Kondensator 13 laden. Der Spannungspegel des Kondensators 13 ist mit dem Steuereingang des spannungsgesteuerten Oszillators 4 gekoppelt und beeinflusst somit die Frequenz des Hochfrequenzsignals 5.

In Figur 3 ist schematisch das Spektrum des Hochfrequenzsignals 4 aus dem phasengekoppelten Regelkreis 1 dargestellt. Neben dem Hauptsignal 20 des Hochfrequenzsignals 4 mit der gewünschten Frequenz F0 ergeben sich weitere Signalbeiträge bei den Frequenzen F0-d und F0+d, die nachfolgend Nebenlinien 21, 22 genannt werden. Diese-Nebenlinien 21, 22 bilden sich auf Grund der auftretenden Steuerpulse 10 des Phasendetektors 7 bzw. der Ladungspumpe 11, welche getaktet mit dem Referenzsignal 3 auftreten, um das Hochfrequenzsignal 4 synchron zu dem Referenzsignal 3 zu halten. Der Frequenzabstand d entspricht im Mittel der Referenzfrequenz.

Die Signalbeiträge in den Nebenlinien 21, 22 stören erheblich die Signalauswertung bei einem FMCW-Radar. Eine einfache Unterdrückung der Nebenlinien 21, 22 durch nachgeschaltete variable Tiefpassfilter ist nicht zweckmäßig.

Die erfindungsgemäße Ladungspumpe mit den Merkmalen des Patentanspruchs 1 reduziert vorteilhafterweise den Signalbeitrag von Nebenlinien bei Verwendung in einem phasengekoppelten Regelkreis eines FMCW-Radars.

Erfindungsgemäß beinhaltet die Ladungspumpe:
- einen Steuereingang zum Anlegen eines Steuerpulses,
- eine gepulste Stromquelle zum Generieren eines Strompulses entsprechend dem Steuerpuls,
- eine Gleichstromquelle zum Generieren eines Gleichstroms, und
- einen Stromausgang, der mit der gepulsten Stromquelle und der Gleichstromquelle verbunden ist.

Eine Maßnahme der vorliegenden Erfindung ist, dass die Ladungspumpe einen Gleichstrom ausgibt. Dieser Gleichstrom bewirkt in einem phasengekoppelten Regelkreis, dass die Frequenz des Ausgabesignals eines spannungsgesteuerten Oszillators sich kontinuierlich erhöht bzw. bei anderer Polarität des Gleichstroms erniedrigt. Der Phasenunterschied des Ausgabesignals zu dem Referenzsignals ist somit geringer. Vorausgesetzt die Polarität des Gleichstroms ist so gewählt, dass sich die Frequenz des Ausgabesignals gleichlaufend mit dem Referenzsignal und/oder dem Teilerverhältnis des Teilers erhöht bzw. gleichlaufend verringert. Der geringere Phasenunterschied, der die Regelgröße des phasengekoppelt Regelkreises darstellt, bewirkt schwächere oder keine Regelsignale, d.h. Strompulse durch die Ladungspumpe. Folglich reduziert sich vorteilhafterweise die Intensität der Nebenlinien.

In einer besonders bevorzugten Ausgestaltung ist die Gleichstromquelle einstellbar und weist einen Steuereingang zum Einstellen des Gleichstroms auf. Insbesondere ist der Gleichstrom auf negative Stromwerte und positive Stromwerte einstellbar. Vorzugsweise können auch Stromwerte mit unterschiedlichen Beträgen eingestellt werden, um unterschiedliche Änderungsraten der Frequenz über die Zeit von Ausgangssignalen eines spannungsgesteuerten Oszillators realisieren zu können. Im Idealfall wird der Gleichstrom derart eingestellt, dass er direkt eine Frequenzänderung des spannungsgesteuerten Oszillators bewirkt, die von der Änderung des Referenzsignals und/oder des Teilerverhältnisses vorgegeben ist. Bei spannungsgesteuerten Oszillatoren mit einer ideal linearen Abhängigkeit zwischen Steuerspannung und Frequenz des Ausgabesignals kann dies durch einen einzigen Stromwert je Änderungsrate der Frequenz des Referenzsignals und/oder Teilerverhältnis des Frequenzteilers erreicht werden.

Eine Weiterbildung sieht vor, dass die Ladungspumpe eine Pulsweitenerfassungseinrichtung aufweist, die mit dem Steuereingang zum Erfassen der Pulsweite des Steuerpulses gekoppelt ist, und eine Steuereinrichtung aufweist, die mit dem Steuereingang der Gleichstromquelle gekoppelt ist, um den Gleichstrom ansprechend auf die Pulsweite des Steuerpulses einzustellen. Diese Maßnahme basiert darauf, daß die Pulsweite ein Maß für die Regelaktivität einem phasengekoppelten Regelkreis ist. Je größer die mittlere Pulsweite, umso stärker regelt der phasengekoppelte Regelkreis die Frequenz des Ausgangssignals des spannungsgesteuerten Oszillators dem Referenzfrequenzsignal nach. Die Regelabweichung, d.h. die Pulsweite, wird bei dieser Weiterbildung dadurch reduziert, dass der Gleichstrom mit zunehmender Pulsweite (im Betrag) erhöht wird. Dies ist insbesondere dann von Vorteil, wenn der spannungsgesteuerte Oszillator keine lineare Abhängigkeit der Frequenz seines Ausgangssignals zu der Eingangsspannung an seinem Steuereingang aufweist.

Eine Ausgestaltung sieht einen zweiten Steuereingang zum Anlegen zweiter Steuerpulse anstelle erter Steuerpulse vor, auf die ansprechend die gepulste Stromquelle zweite Strompulse ausgibt. Die Pulsweitenerfassungseinrichtung kann zum Erfassen der Pulsweite der zweiten Steuerpulse eingerichtet sein. Die Steuereinrichtung verringert den Gleichstrom, wenn zweite Steuerpulse erfasst werden und erhöht den Gleichstrom, wenn erste Steuerpulse erfasst werden.

Die Pulsweitenerfassungseinrichtung kann als Integrator oder als Filter ausgebildet sein. Die Pulsweitenerfassungseinrichtung kann ebenso eine digitale Abtasteinrichtung für die Pulsweite aufweisen.

In einer Ausgestaltung ist die gepulste Stromquelle eingerichtet, ansprechend auf den Steuerpuls einen Strompuls auszugeben, der die gleiche Pulsweite wie die Pulsweite des Steuerpulses aufweist.

In einer weiteren Ausgestaltung ist die gepulste Stromquelle derart eingerichtet, daß sie auf den Steuerpuls einen ersten und einen zweiten Strompuls mit jeweils einer Pulsweite ausgibt, wobei die gepulste Stromquelle mit einer Referenzsignalquelle gekoppelt ist, um den ersten Strompuls mit einer steigenden Flanke eines Referenzfrequenzsignals der Referenzsignalquelle und den zweiten Strompuls mit fallender Flanke des Referenzfrequenzsignals auszugeben. Die Strompulse werden mit der doppelten Rate generiert, verglichen zu den zuvor beschriebenen Ausführungsformen. Dies hat zweierlei vorteilhaften Effekt. Erstens verdoppelt sich der Frequenzabstand der Nebenlinien zu dem eigentlichen gewünschten Signal des spannungsgesteuerten Oszillators. Zweitens verteilt sich das Steuersignal auf zwei Strompulse, wodurch die Intensität der Signale in den Nebenlinien geringer wird.

Einen phasengekoppelten Regelkreis kann beinhalten:
einen spannungsgesteuerten Oszillator mit einem Steuereingang zum Generieren eines Ausgabesignals mit einer Frequenz,
eine Referenzfrequenzsignalquelle zum Generieren eines Referenzsignals mit einer Referenzfrequenz,
einen Phasendetektor zum Ausgeben eines Steuerpulses ansprechend auf einen Phasenunterschied zwischen dem Ausgabesignal und dem Referenzsignal,
die erfindungsgemäße Ladungspumpe, deren Steuereingang mit dem Phasendetektor zum Übermitteln der Steuerpulse gekoppelt ist, und
einen Filter, der zwischen dem Stromausgang der Ladungspumpe und dem Steuereingang des spannungsgesteuerten Oszillators angeordnet ist.

Die Referenzfrequenzsignalquelle kann einstellbar sein, um ein einstellbares Referenzsignal auszugeben und die Frequenz des Ausgabesignals einzustellen.

Der phasengekoppelte Regelkreis kann einen einstellbaren Frequenzteiler aufweisen, der dem spannungsgesteuerten Oszillator und dem Phasendetektor zwischengeschaltet ist, um die Frequenz des Ausgabesignals einzustellen.

Der phasengekoppelte Regelkreis kann in einem FMCW-Radar für den Kraftfahrzeugbereich verwendet werden.

Ein Verfahren zum Regeln einem phasengekoppelten Regelkreis für ein FMCW-Radar sieht folgende Verfahrensschritte vor:
Ausgeben eines Ist-Signals durch einen spannungsgesteuerten Oszillator; Bereitstellen eines Referenzsignals,
Variieren des Referenzsignals, so dass es zumindest während einer Zeitspanne eine monoton wachsende Frequenz aufweist und/oder Teilen der Frequenz des Ist-Signals durch einen monoton wachsenden Teiler;
Bestimmen einer Phasendifferenz zwischen dem Referenzsignal und dem Ist-Signal; Generieren eines Strompulses mit einer Pulsweite ansprechend auf die bestimmte Phasendifferenz;
Generieren eines Gleichstroms zumindest während der Zeitspanne;
Überlagern des Gleichstroms mit dem Strompuls zu einem Stromsignal; und Einspeisen des Stromsignals in einen Steuereingang eines steuerbaren Oszillators, der das Ist-Signal generiert.

### KURZE BESCHREIBUNG DER ZEICHNUNGEN:

Figur 1 zeigt ein Blockschaltbild eines phasengekoppelt Schleife nach dem Stand der Technik;
Figur 2 zeigt Signale des phasengekoppelt Regelkreises nach Figur 1;
Figur 3 zeigt ein Spektrum des Ausgabesignals von Figur 1;

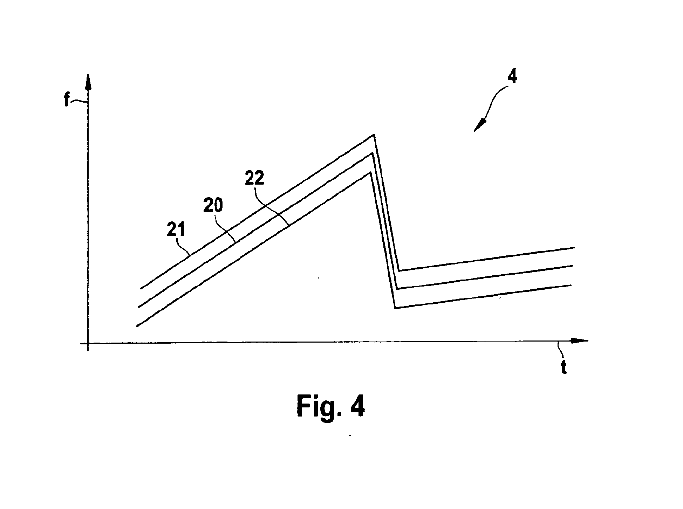

Figur 4 zeigt ein zeitveränderliches Ausgabesignal von Figur 3;
Figur 5 zeigt eine erste Ausführungsform einer Ladungspumpe, verwendet in einer phasengekoppelt Regelschleife;
Figur 6 zeigt Signale des phasengekoppelt Regelkreises von Figur 5;
Figur 7 zeigt eine zweite Ausführungsform der Ladungspumpe;
Figur 8 zeigt Signale zu Figur 1;
Figur 9 zeigt eine dritte Ausführungsform der Ladungspumpe;
Figur 10 zeigt eine vierte Ausführungsform der Ladungspumpe; und
Figur 11 zeigt Signale zu Figur 10.

### BESCHREIBUNG DER AUSFÜHRUNGSFORMEN

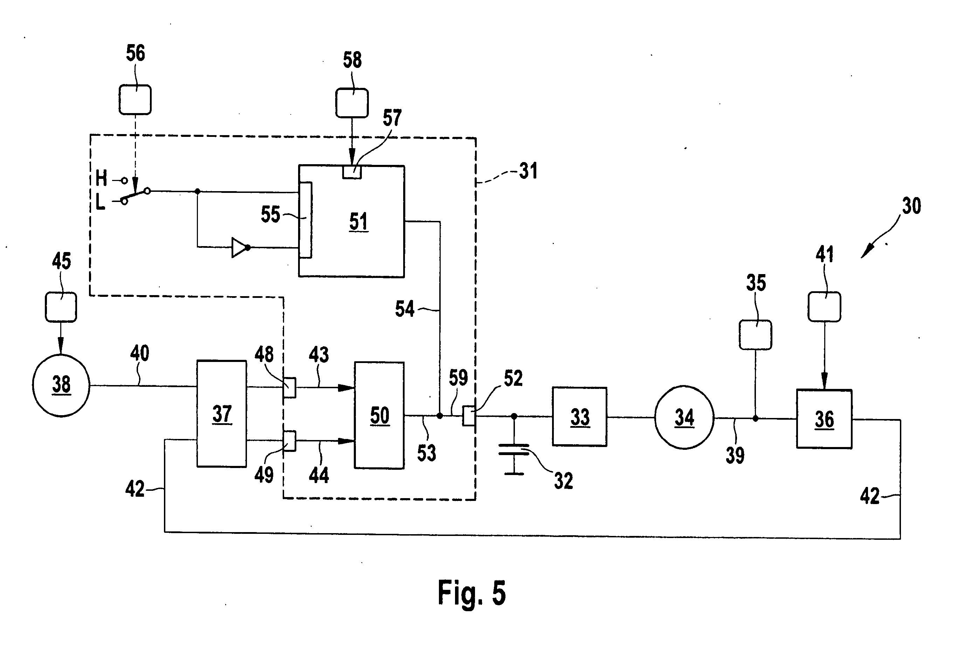

In Figur 5 ist eine Regelschleife 30 gezeigt, in welcher eine Ausführungsform der Ladungspumpe 31 integriert ist. Neben der Ladungspumpe 31 weist der phasengekoppelte Regelkreis 30 einen Kondensator 32, einen Filter 33, einen spannungsgesteuerten Oszillator 34, einen Ausgang 35, einen Frequenzteiler 36, einen Phasendetektor 37, der typischerweise als Phasen-Frequenzdetektor ausgebildet wird, und eine Referenzsignalquelle 38 auf. Der phasengekoppelte Regelkreis 30 gewährleistet, dass ein Verhältnis der Frequenz eines Ausgabesignals 39 des spannungsgesteuerten Oszillators 34 zu der Frequenz eines Referenzsignals 40 der Referenzsignalquelle 38 im Rahmen der Regelgeschwindigkeit des phasengekoppelt Regelkreises 30 konstant bleibt. Das Verhältnis entspricht dem Teilungsverhältnis, das durch den Frequenzteiler 36 vorgegeben ist.

Eine Variation der Frequenz des Ausgabesignals wird vorzugsweise durch eine Änderung des Teilerverhältnisses des Frequenzteilers 36 erreicht. Gleichermaßen kann die Frequenz auch durch eine Änderung der Referenzfrequenz variiert werden.

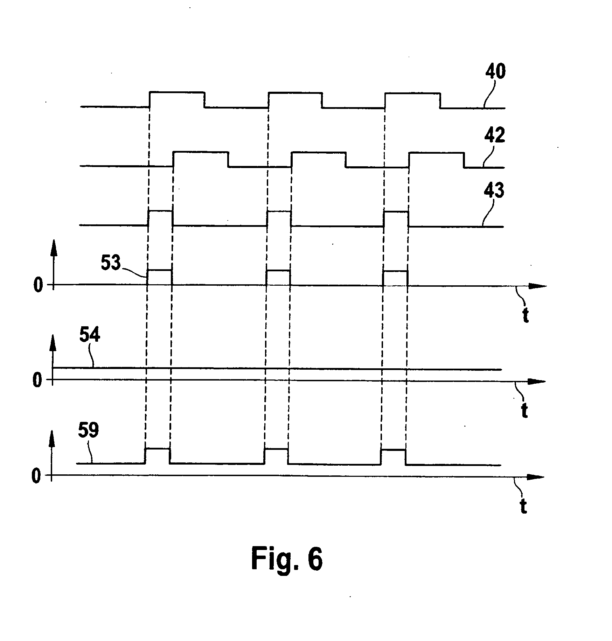

Das Teilungsverhältnis des Frequenzteilers 36 kann durch eine Steuerungseinrichtung 41 eingestellt werden, um das Verhältnis zwischen der Frequenz des Ausgabesignals 39 und der Frequenz des Referenzsignals 40 einzustellen und gegebenenfalls zu ändern. Das vom Frequenzteiler 36 ausgegebene geteilte Signal 42 wird zusammen mit dem Referenzsignal 40 dem Phasendetektor 37 zugeführt. Der Phasendetektor 37 bestimmt die Phasendifferenz zwischen diesen beiden Signalen 40, 42. In dem in Figur 6 dargestellten Beispiel gibt der Phasendetektor 37 ein erstes Phasendifferenzsignal 43 aus, wenn das Referenzsignal 40 dem geteilten Signal 42 vorauseilt. Die Breite der Pulse des Phasendifferenzsignals 43 entspricht der Phasendifferenz zwischen dem Referenzsignal 40 und dem geteilten Signal 42. Falls das Referenzsignal dem geteilten Signal 42 nacheilt, gibt der Phasendetektor 37 anstelle des ersten Referenzsignals 43 ein zweites Phasendifferenzsignal 44 aus.

Das Referenzsignal 40, das von der Referenzsignalquelle 38 ausgegeben wird, kann in seiner Frequenz durch eine Steuereinrichtung 45 variiert werden. Bei der Verwendung des phasengekoppelt Regelkreises 30 in einem FMCW-Radar (nicht dargestellt) kann die Frequenz des Referenzsignals 40 abschnittsweise mit konstanter Änderungsrate geändert werden. Vorzugsweise sind unterschiedliche Änderungeraten sowohl im Betrag als auch im Vorzeichen, d.h. mit abnehmender oder zunehmender Frequenz, einstellbar.

Das erste Phasendifferenzsignal 43 bzw. das zweite Phasendifferenzsignal 44 dienen als Steuersignale für die Ladungspumpe 31, welche über Steuereingänge 48 und 49 einspeisbar sind.

Die Ladungspumpe 31 weist eine gepulste Stromquelle 50 und eine Gleichstromquelle 51 auf, die parallel geschaltet mit einem gemeinsamen Ausgang 52 der Ladungspumpe 31 verbunden sind.

Der gepulsten Stromquelle 50 werden die Steuersignale 43, 44 zugeführt. Getriggert durch das erste Steuersignal 43 gibt die gepulste Stromquelle 50 einen ersten Strompuls 53 aus, der typischerweise die gleiche Pulsweite aufweist wie die Pulsweite des Steuersignals 43. Bei einem zweiten Steuersignal 44 gibt die gepulste Stromquelle 50 einen zweiten Strompuls aus. Der erste und zweite Strompuls sind von entgegengesetzter Polarität, um entweder die Ist-Frequenz des spannungsgesteuerten Oszillators zu erhöhen bzw. zu erniedrigen. Die Strompulse 53 sind beispielhaft in Figur 6 über die Zeit t zusammen mit einem zugehörigen Referenzsignal 40, einem geteilten Signal 42 und einem Phasendifferenzsignal 43 aufgetragen dargestellt.

Die Gleichstromquelle 51 gibt einen Gleichstrom 54 aus. Die Gleichstromquelle 51 weist einen Steuereingang 55 auf, über den die Polarität des Gleichstroms einstellbar ist. Eine entsprechende Steuereinrichtung 56 steuert die Polarität des Gleichstroms 54 via den Steuereingang 55. Vorteilhafterweise weist die Gleichstromquelle 51 einen weiteren Steuereingang 57 auf, über welchen eine Steuereinrichtung 58 den Stromwert, gegebenenfalls auch die Polarität des Gleichstroms 54 einstellen kann. Ein Beispiel für einen Gleichstrom 54 ist über die Zeit t aufgetragen in Figur 6 dargestellt.

Der Gleichstrom 54 und die Strompulse 53 summieren sich in dem Ausgang der Ladungspumpe 31 zu einem Ladestrom 59. Der Ladestrom 59 ist graphisch in Figur 6 dargestellt. Der Ladestrom 59 lädt den Kondensator 32 mit nachgeschaltetem Filter 33 oder einen anders gestalteten Integrator. Das Spannungssignal des Kondensators 32 steuert den spannungsgesteuerten Oszillator 34 an.

Die Bedeutung der Gleichstromquelle 51 der Ladungspumpe 31 wird nachfolgend ausgeführt.

Zunächst sei angenommen der Gleichstrom 54 ist auf Null Ampere eingestellt. Ferner gibt das Referenzsignal 40 eine monoton steigende Referenzfrequenz vor. Der phasengekoppelte Regelkreis 30 regelt die Frequenz des Ausgabesignals 39 fortlaufend der steigenden Referenzfrequenz oder aufgrund des steigenden Teilerverhältnisses nach. Dazu bestimmt der Phasendetektor 37 den momentanen Phasenunterschied zwischen dem Referenzsignal 40 und dem aus dem Ausgabesignal 39 bzw. dem aus dem Ausgabesignal 39 abgeleiteten Signal 42. Durch die sich ständig wachsende Referenzfrequenz oder ein ständig wachsendes Teilerverhältnis ergibt sich eine andauernde Phasendifferenz. Die Phasendifferenz wird systembedingt durch den Phasendetektor 37 im Takt des Referenzsignals 40 bestimmt. In dem in Figur 6 illustrierten Beispiel wird die Phasendifferenz mit steigender Flanke des Referenzsignals 40 ermittelt. Folglich ergeben sich Steuerpulse 43 mit einer Breite entsprechend der Phasendifferenz, wobei die Steuerpulse 43 im Takt des Referenzsignals 40 auftreten. Die Steuerpulse 43 werden durch die Ladungspumpe 31 in Strompulse 53 und von dem Kondensator 32 in Spannungspulse umgesetzt. Der spannungsgesteuerte Oszillator 34 reagiert mit einer getakteten Anhebung der Frequenz seines Ausgabesignals 39.

Die Taktung führt zu einer Modulation des Ausgabesignals 39. Die Modulation zeigt sich bei einer Spektralanalyse des Ausgabesignals 39 als Nebenlinien bei Frequenzen, die um die Referenzfrequenz, also den Takt, verschieden zu der mittleren Frequenz des Ausgabesignals 39 sind. Die Amplitude der Nebenlinien, d.h. die Leistung des Ausgabesignals 39 das mit der Frequenz der Nebenlinien emittiert wird, steigt mit zunehmender Stärke der Strompulse 53 bzw. der Spannungspulse an dem spannungsgesteuerten Oszillator 34.

Der Gleichstrom 54 lädt gleichmäßig den Kondensator 32 und veranlasst ein gleichmäßiges Anwachsen der Frequenz des Ausgabesignals 39. Hierbei ergeben sich keine Nebenlinien. Die wesentliche Maßnahme der Ladungspumpe 31 liegt nun darin, einen Gleichstrom 54 bereitzustellen, der den spannungsgesteuerten Oszillator 34 so ansteuert, dass bereits näherungsweise die gewünschte Zeitabhängigkeit der Frequenz des Ausgabesignals 39 realisiert wird. Die noch verbleibenden Phasenunterschiede werden durch den phasengekoppelten Regelkreis 30 ausgeregelt. Die hierbei auftretenden Strompulse 53 zum Ausgleichen der nun geringeren Phasenunterschiede sind schwächer, d.h. weisen eine kürzere Pulsweite auf, und führen folglich zu geringen Beiträgen in den Nebenlinien.

In einfachster Weise wird ein negativer Gleichstrom 54 bereitgestellt, wenn die Frequenz des Ausgabesignals verringert, und ein positiver Gleichstrom 54 bereitgestellt, wenn die Frequenz des Ausgabesignals 39 vergrößert werden soll. Ein Umschalten zwischen dem negativen und dem positiven Gleichstrom 54 erfolgt durch die Steuereinrichtung 56. Das Umschalten sollte erfolgen, wenn die Änderungsrate der Ausgabefrequenz geändert wird, d.h. wenn die Änderungsrate der Referenzfrequenz oder des Teilerverhältnisses geändert wird.

Der Stromwert des Gleichstroms 54 wird vorteilhafterweise an den verwendeten spannungsgesteuerten Oszillator 34 und den Kondensator 32 angepasst. Die mittlere Änderungsrate der Frequenz des Ausgabesignals 39 durch den Gleichstrom 54 sollte näherungsweise der durch das Referenzsignal 40 oder der durch das Teilerverhältnis vorgegebenen Änderungsrate des Ausgabesignals 39 entsprechen.

In der Praxis weisen die meisten spannungsgesteuerten Oszillatoren 34 keine lineare Abhängigkeit der Frequenz des Ausgabesignals 39 von der Eingangsspannung auf. Entsprechend sind geeignete Frequenzbereiche auszuwählen oder ein Gleichstrom 54 auszuwählen, der die geringste mittlere Abweichung von dem vorgegebenen Frequenzverlauf erwarten lässt.

In einer Ausgestaltung ist die Gleichstromquelle 51 mit mehreren Stromquellen oder einer einstellbaren Stromquelle versehen. Dies wird genutzt, um verschiedene Änderungsraten der Frequenz nachzubilden.

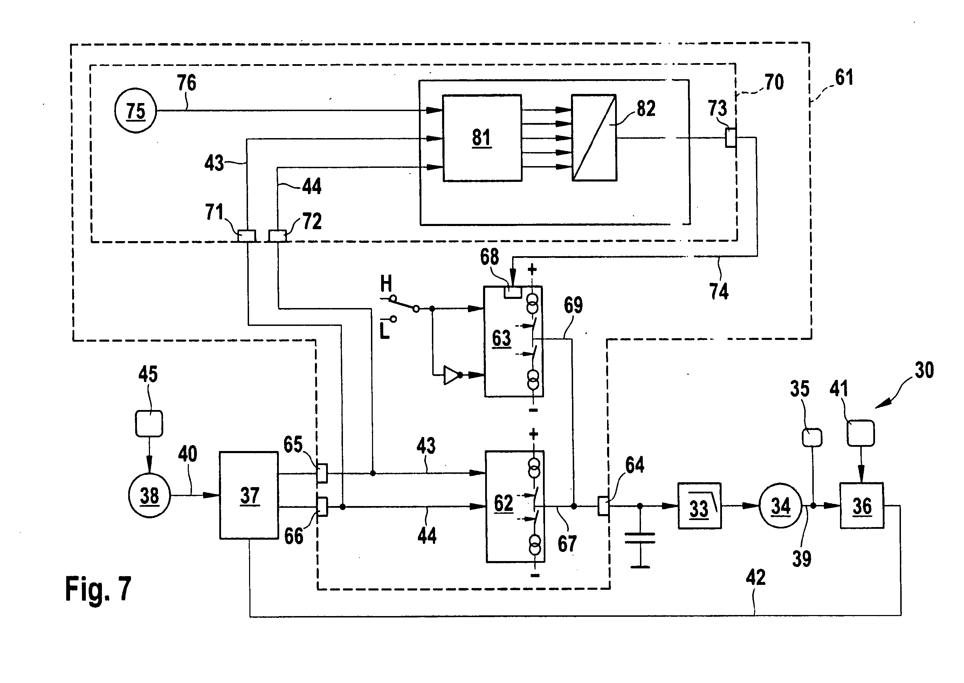

Eine weitere Ausgestaltung der Ladungspumpe ist in Figur 7 gezeigt. Der Ladungspumpe 61 sind ein oder zwei Signaleingänge 65, 66 bereitgestellt, über die die Ladungspumpe 61 mit einem Phasendetektor 37 koppelbar ist, um Phasendifferenzsignale 63, 64 zu empfangen. An die Signaleingänge 65, 66 ist die gepulste Stromquelle 62 mit ihren Eingängen gekoppelt. Die Ladungspumpe 62 gibt entsprechend den Phasendifferenzsignalen 43, 44 Strompulse 46 mit einer Breite aus, die im Wesentlichen der Breite der Pulse der Phasendifferenzsignale 43, 44 entspricht.

Die Gleichstromquelle 63 weist einen Steuereingang 68 auf, über den der Betrag und gegebenenfalls das Vorzeichen des von der Gleichstromquelle 63 ausgegebenen Gleichstroms 69 einstellbar ist. Die Ladungspumpe 61 weist ferner eine Gleichstromregelungseinrichtung 70 auf, deren Signaleingänge 71, 72 mit den Signaleingängen 65, 66 der Ladungspumpe 61 gekoppelt sind. Ein Signalausgang 73 der Gleichstromregelungseinrichtung 70 ist mit dem Steuereingang 68 der Gleichstromquelle 60 gekoppelt.

Das Prinzip der Gleichstromregelungseinrichtung 70 ist, die Pulsweite der Phasendifferenzsignale 43, 44 zu erfassen und ein Steuersignal 74 auszugeben, das einen zunehmenden Gleichstrom 69 mit zunehmender Pulsweite der Phasendifferenzsignale 43, 44 bewirkt. Im einfachsten Fall ist das Steuersignal 74 ein Spannungssignal oder digitales Signal, dessen Betrag proportional zu der Breite der Phasendifferenzsignale 43, 44 ist.

Der Gleichstromquelle kann einen kontinuierlich variierbaren Gleichstrom oder einen in Stufen variierbaren Gleichstrom bereitstellen.

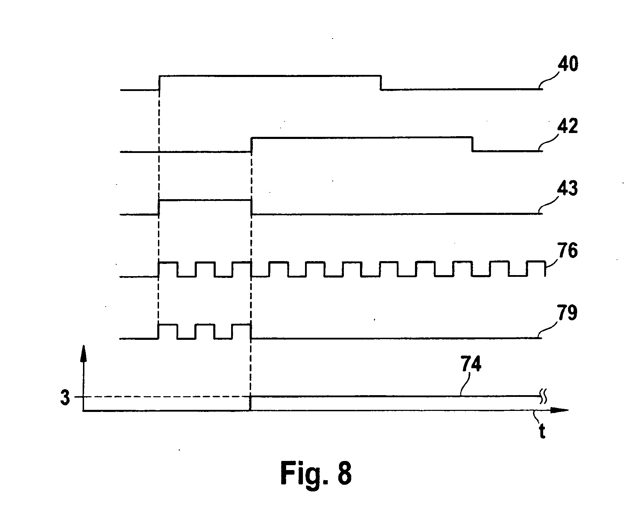

Die in Figur 7 dargestellte Gleichstromregelungseinrichtung 70 ist im Wesentlichen eine Pulsweitenerfassungseinrichtung und weist hierzu eine digitale Abtastung der Pulsbreite der Phasendifferenzsignale 43, 44 auf, die über die Signaleingänge 71, 72 eingespeist werden. In Figur 8 ist beispielhaft ein Phasendifferenzsignal 43 über die Zeit t aufgetragen dargestellt, das sich für das Referenzfrequenzsignal 40 und das geteilte Signal 42 ergibt.

Die Gleichstromregelungseinrichtung 70 weist einen Taktgenerator 75 auf, der ein hochfrequentes Taktsignal 76 ausgibt, das in einen Zählerbaustein 81 eingespeist wird. Zudem werden dem Zählerbaustein 81 das Phasendifferenzsignal 43, 44 zugeführt. Das Phasendifferenzsignal 43, 44 kann als Trigger für den Zählerbaustein 81 dienen. Der Zähler 81 zählt die Pulse des Signals 79 und steuert einen Digital/Analog-Wandler 82 an, der daraufhin ein dem Zählwert entsprechendes Steuersignal 74 generiert. In dem in Figur 8 illustratorisch gezeigten Beispiel erhält das Steuersignal 74 einen Spannungspegel, der drei Zählwerten entspricht.

Die Gleichstromregelung 70 ändert den Gleichstrom 69 im Wesentlichen nur, wenn die Änderungsrate der Referenzfrequenz des Referenzsignals 39 oder des Teilerverhältnis des Frequenzteilers sich ändert oder der spannungsgesteuerte Oszillator 34 eine erhebliche nichtlineare Abhängigkeit der Frequenz des Ausgabesignals 41 und des Spannungssteuersignals an seinem Steuereingang aufweist. Folglich führt die Gleichstromregelungseinrichtung 70 aufgrund ihrer seltenen oder geringen Regelaktivität zu keinen Nebenlinien oder nur schwachen Nebenlinien in dem Ausgabesignal 41 des phasengekoppelt Regelkreises 30.

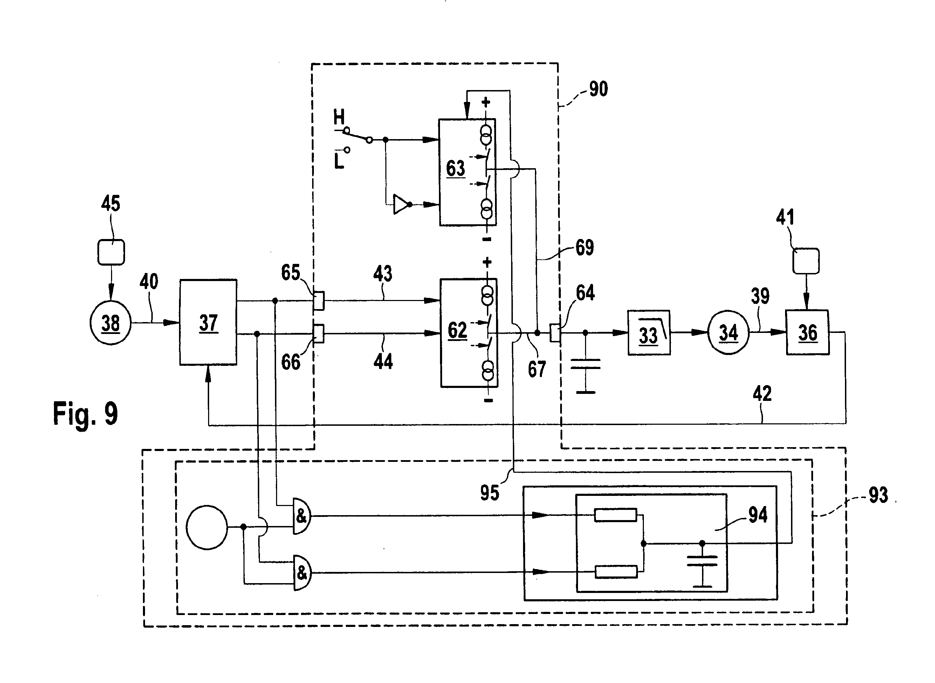

In Figur 9 ist eine weitere Ausgestaltung der Ladungspumpe 90 dargestellt. Die Ladungspumpe 90 setzt sich gleich der zur vorbeschriebenen Ausführungsform aus einer gepulsten Stromquelle 62, einer Gleichstromquelle 63 und einer Gleichstromregelung 93 zusammen. Die Gleichstromregelung 93 ist durch einen analogen Integrator 94 gebildet. An den analogen Integrator 94 werden die Phasendifferenzsignale 43, 44 angelegt. Das Ausgangssignal 95 des Integrators 94 dient als Steuersignal für die Gleichstromquelle 63.

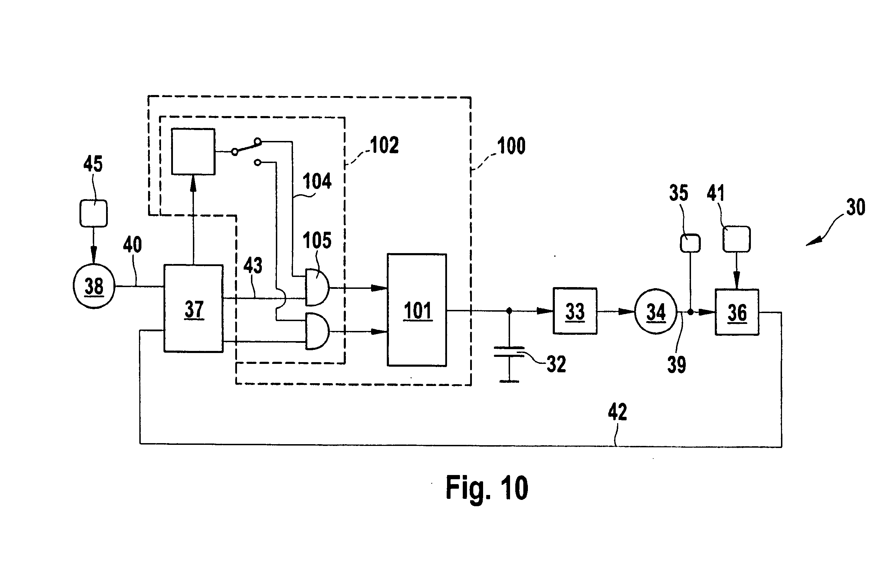

In Figur 10 ist eine weitere Ausführungsform der Ladungspumpe 100 dargestellt. Sie dient ebenfalls zur Verwendung in einem phasengekoppelten Regelkreis 30. Die Ladungspumpe 100 weist eine gepulste Stromquelle 101 und eine Pulsverdoppelungseinrichtung 102 auf. Die Pulsverdoppelungseinrichtung 102 ist zwischen die Steuereingänge der gepulsten Stromquelle 101 und Signaleingänge der Ladungspumpe 100 geschaltet, über die Phasendifferenzsignale eingekoppelt werden.

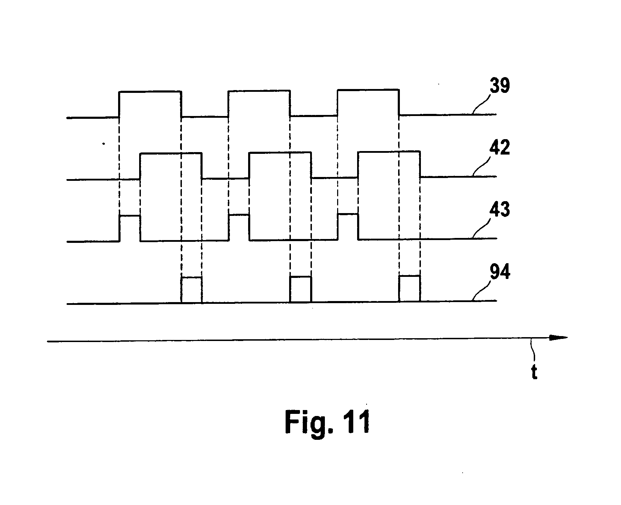

Ein Phasendetektor 37 bestimmt die Phasendifferenz zwischen zwei Eingangssignalen 40, 42 entweder an einer steigenden Flanke des Referenzsignals 40 oder an dessen fallender Flanke. In Figur 11 ist beispielhaft dies für die steigende Flanke illustriert. Der Phasendetektor 37 gibt zwischen einer steigenden Flanke des Referenzsignals 40 und der steigenden Flanke des Vergleichssignals 42 einen Spannungspuls mit dem Phasendifferenzsignal 43 aus. Die Wiederholungsrate dieser Spannungspulse 43 entspricht also der Taktrate des Referenzsignals 40. Wie bereits ausgeführt, entstehen durch diese Taktrate Nebenlinien in dem Ausgangssignal 39 einem phasengekoppelten Regelkreis 30 mit einem Frequenzabstand gleich dieser Taktrate zu der Frequenz des gewünschten Hauptsignals.

Die Frequenzverdoppelungseinrichtung 102 ist derart eingerichtet, dass sie zu den Pulsen des Phasendifferenzsignals 43 weitere Pulse in einem Verdoppelungssignal 104 generiert. Diese entsprechen Phasendifferenzsignalen bestimmt zwischen der fallenden Flanke des Referenzsignals 40 und der fallenden Flanke des Vergleichssignals 42. In einer Verknüpfungseinheit 105 werden das Phasendifferenzsignal 43 und das Verdoppelungssignal 104 zu einem gemeinsamen Signal addiert. Die Pulse erfolgen nun mit der doppelten Taktung verglichen zu dem Takt des Referenzsignals 40. Entsprechend verschiebt sich die Frequenz der Nebenlinien der Hauptfrequenz weg. Dieser größere Frequenzabstand ermöglicht eine einfachere Separierung. Zudem sinkt die Signalintensität in den Nebenlinien bei der Verdoppelung der Taktungsrate.

## Patentansprüche

1. Ladungspumpe (31, 61, 90), insbesondere für einen phasengekoppelten Regelkreis (30), mit einem Steuereingang (48, 49, 65, 66) zum Anlegen eines Steuerpulses (43, 44), einer gepulsten Stromquelle (50, 62) zum Generieren eines Strompulses (53, 67) entsprechend dem Steuerpuls (43, 44), einer Gleichstromquelle (51, 63) zum Generieren eines Gleichstroms (54, 69) und einem Stromausgang (52, 64), der mit dem Ausgang der gepulsten Stromquelle (50, 62) und dem Ausgang der Gleichstromquelle (51, 63) zum Überlagem des Gleichstroms (54, 69) und des Strompulses (53, 67) verbunden ist, wobei die Gleichstromquelle (51, 63) einstellbar ist und einen Steuereingang (57) zum Einstellen des Gleichstroms (54, 69) aufweist.

2. Ladungspumpe nach Anspruch 1, die eine Gleichstromsteuereinrichtung (70, 93) aufweist, die mit dem Steuereingang der Gleichstromquelle (63) gekoppelt ist, um den Gleichstrom (69) ansprechend auf die Pulsweite des Steuerpulses (43, 44) einzustellen.

3. Ladungspumpe nach Anspruch 2, wobei die Gleichstromsteuereinrichtung (93) einen analogen Integrator (94) aufweist.

4. Ladungspumpe nach Anspruch2, wobei die Gleichstromsteuereinrichtung (70) eine digitale Pulsweitenerfassungseinrichtung (75, 81) aufweist.

5. Ladungspumpe nach einem der Ansprüche 2 bis 4, wobei die Gleichstromsteuereinrichtung eingerichtet ist, den Gleichstrom bei zunehmender Pulsweite des Steuerpulses zu ändern.

6. Ladungspumpe nach einem der vorhergehenden Ansprüche, wobei die gepulste Stromquelle (50, 62) eingerichtet ist, ansprechend auf den Steuerpuls einen Strompuls mit einer Breite gleich der Breite des Steuerpulses auszugeben.

7. Ladungspumpen nach Anspruch 6, wobei die gepulste Stromquelle (50, 62) eingerichtet ist, ansprechend auf den Steuerpuls einen ersten Strompuls und einen zweiten Strompuls auszugeben mit jeweils einer Breite gleich der Breite des Steuerpulses auszugeben, und ansprechend auf ein Referenzsignal den ersten Strompuls mit der steigenden Flanke und den zweiten Strompuls mit der fallenden Flanke des Referenzsignals auszugeben.

8. Verwendung einer Ladungspumpe nach einem der Ansprüche 1 bis7 für einen phasengekoppelten Regelkreis (30).

9. Verwendung des phasengekoppelt Regelkreises (30) nach Anspruch 8 für ein FMCW-Radar in einem Kraftfahrzeug.

10. Verfahren zum Regeln einem phasengekoppelten Regelkreis (30) für ein FMCW-Radar mit den folgenden Verfahrensschritten:
Ausgeben eines Ist-Signals (39, 42) durch einen spannungsgesteuerten Oszillator;
Bereitstellen eines Referenzsignals (40),
Variieren des Referenzsignals (40), so dass es zumindest während einer Zeitspanne eine monoton ändernde Frequenz aufweist und/oder Teilen der Frequenz des Ist-Signals durch einen monoton änderndes Teilerverhältnis;
Bestimmen einer Phasendifferenz zwischen dem Referenzsignal (40) und dem Ist-Signal (39, 42);
Generieren eines Strompulses (53, 67) mit einer Pulsweite ansprechend auf die bestimmte Phasendifferenz;
Generieren eines Gleichstroms (54, 69) zumindest während der Zeitspanne; wobei der Gleichstrom einstellbar ist,
Überlagern des Gleichstroms (54, 69) mit dem Strompuls (53, 67) zu einem Stromsignal; und
Einspeisen des Stromsignals in einen Steuereingang eines steuerbaren Oszillators (34), der das Ist-Signal (39, 42) generiert.

## Claims

1. Charge pump (31, 61, 90), in particular for a phase-coupled control circuit (30), having. a control input (48, 49, 65, 66) for applying a control pulse (43, 44), a pulsed power source (50, 62) for generating a current pulse (53, 67) in accordance with the control pulse (43, 44), a direct current source (51, 63) for generating a direct current (54, 69) and a current output (52, 64) which is connected to the output of the pulsed current source (50, 62) and to the output of the direct current source (51, 63) for superimposing the direct current (54, 69) and the current pulse (53, 67), and wherein the direct current source (51, 63) can be adjusted and has a control input (57) for adjusting the direct current (54, 69).

2. Charge pump according to Claim 1, which has a direct current control device (70, 93) which is coupled to the control input of the direct current source (63) in order to adjust the direct current (69) in response to the pulse width of the control pulse (43, 44).

3. Charge pump according to Claim 2, wherein the direct current control device (93) has an analogue integrator (94).

4. Charge pump according to Claim 2, wherein the direct current control device (70) has a digital pulse width-detecting device (75, 81).

5. Charge pump according to one of Claims 2 to 4, wherein the direct current control device is configured to change the direct current when the pulse width of the control pulse increases.

6. Charge pump according to one of the preceding claims, wherein the pulsed current source (50, 62) is configured to output a current pulse with a width equal to the width of the control pulse in response to the control pulse.

7. Charge pump according to Claim 6, wherein the pulsed current source (50, 62) is configured to output a first current pulse and a second current pulse in response to the control pulse, each with a width equal to the width of the control pulse, and to output, in response to a reference signal, the first current pulse with the rising edge and the second current pulse with the falling edge of the reference signal.

8. Use of a charge pump according to one of Claims 1 to 7 for a phase-coupled control circuit (30).

9. Use of the phase-coupled control circuit (30) according to Claim 8 for an FMCW radar in a motor vehicle.

10. Method for controlling a phase-coupled control circuit (30) for an FMCW radar having the following method steps:
outputting an actual signal (39, 42) by means of a voltage-controlled oscillator;
making available a reference signal (40),
varying the reference signal (40) with the result that it has a monotonously changing frequency at least during a time period and/or dividing the frequency of the actual signal by means of a monotonously changing division ratio;
determining a phase difference between the reference signal (40) and the actual signal (39, 42);
generating a current pulse (53, 67) with a pulse width in response to the specific phase difference;
generating a direct current (54, 69) at least during the time period;
wherein the direct current can be adjusted,
superimposing the current pulse (53, 67) on the direct current (54, 69) to form a current signal; and
feeding the current signal into a control input of a controllable oscillator (34) which generates the actual signal (39, 42).

## Revendications

1. Pompe de charge (31, 61, 90), notamment pour un circuit de régulation (30) à couplage de phases, comprenant une entrée de commande (48, 49, 65, 66) pour l'application d'une impulsion de commande (43, 44), une source de courant pulsée (50, 62) pour générer une impulsion de courant (53, 67) conformément à l'impulsion de commande (43, 44), une source de courant continu (51, 63) pour générer un courant continu (54, 69) et une sortie de courant (52, 64) qui est reliée avec la sortie de la source de courant pulsée (50, 62) et la sortie de la source de courant continu (51, 63) pour la superposition du courant continu (54, 69) et de l'impulsion de courant (53, 67), la source de courant continu (51, 63) étant réglable et présentant une entrée de commande (57) pour le réglage du courant continu (54, 69).

2. Pompe de charge selon la revendication 1, laquelle présente un dispositif de commande de courant continu (70, 93) qui est connecté à l'entrée de commande de la source de courant continu (63) afin de régler le courant continu (69) en réaction à la largeur d'impulsion de l'impulsion de commande (43, 44).

3. Pompe de charge selon la revendication 2, avec laquelle le dispositif de commande de courant continu (93) présente un intégrateur analogique (94).

4. Pompe de charge selon la revendication 2, avec laquelle le dispositif de commande de courant continu (70) présente un dispositif de détection de largeur d'impulsion (75, 81).

5. Pompe de charge selon l'une des revendications 2 à 4, avec laquelle le dispositif de commande de courant continu est conçu pour modifier le courant continu lorsque la largeur d'impulsion de l'impulsion de commande augmente.

6. Pompe de charge selon l'une des revendications précédentes, avec laquelle la source de courant pulsée (50, 62) est configurée pour délivrer, en réaction à l'impulsion de commande, une impulsion de courant ayant une largeur égale à la largeur de l'impulsion de commande.

7. Pompe de charge selon la revendication 6, avec laquelle la source de courant pulsée (50, 62) est configurée pour délivrer, en réaction à l'impulsion de commande, une première impulsion de courant et une deuxième impulsion de courant ayant respectivement une largeur égale à la largeur de l'impulsion de commande et, en réaction à un signal de référence, pour délivrer la première impulsion de courant avec le front montant et la deuxième impulsion de courant avec le front descendant du signal de référence.

8. Utilisation d'une pompe de charge selon l'une des revendications 1 à 7 pour un circuit de régulation (30) à couplage de phases.

9. Utilisation du circuit de régulation (30) à couplage de phases selon la revendication 8 pour un radar FMCW dans un véhicule automobile.

10. Procédé pour réguler un circuit de régulation (30) à couplage de phases pour un radar FMCW comprenant les étapes de procédé suivantes :
délivrance d'un signal réel (39, 42) par un oscillateur commandé en tension ;
mise à disposition d'un signal de référence (40) ;
variation du signal de référence (40) de telle sorte qu'il présente, au moins pendant un intervalle de temps, une fréquence et/ou des parties de la fréquence du signal réel à variation monotone par le biais d'un rapport de diviseur à variation monotone ;
détermination d'une différence de phase entre le signal de référence (40) et le signal réel (39, 42) ;
génération d'une impulsion de courant (53, 67) ayant une largeur d'impulsion en réaction à la différence de phase déterminée ;
génération d'un courant continu (54, 69) au moins pendant l'intervalle de temps ;
le courant continu étant réglable ;
superposition du courant continu (54, 69) et de l'impulsion de courant (53, 67) en un signal de courant ; et
injection du signal de courant dans une entrée de commande d'un oscillateur commandable (34) qui génère le signal réel (39, 42).
